(19) Europäisches Patentamt
European Patent Office
Office européen des brevets

(11) EP 4 645 503 A1

(12) # EUROPEAN PATENT APPLICATION
published in accordance with Art. 153(4) EPC

(43) Date of publication:
**05.11.2025 Bulletin 2025/45**

(21) Application number: **23912767.3**

(22) Date of filing: **21.12.2023**

(51) International Patent Classification (IPC):
***H01M 10/0567*** *(2010.01)* ***H01M 10/0569*** *(2010.01)*
***H01M 50/103*** *(2021.01)*

(52) Cooperative Patent Classification (CPC):
**H01M 10/0567; H01M 10/0569; H01M 50/103;**
Y02E 60/10

(86) International application number:
**PCT/KR2023/021218**

(87) International publication number:
**WO 2024/144092 (04.07.2024 Gazette 2024/27)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **27.12.2022 KR 20220186222**

(71) Applicants:
- **SK On Co., Ltd.**
  **Seoul 03161 (KR)**
- **SK innovation Co., Ltd.**
  **Seoul 03188 (KR)**

(72) Inventors:
- **LEE, Min Young**
  **Daejeon 34124 (KR)**
- **KIM, Jong Chan**
  **Daejeon 34124 (KR)**

(74) Representative: **Stolmár & Partner Patentanwälte PartG mbB**
**Blumenstraße 17**
**80331 München (DE)**

(54) # ELECTROLYTE FOR RECHARGEABLE LITHIUM BATTERY, AND RECHARGEABLE LITHIUM BATTERY COMPRISING SAME

(57) An electrolyte for a rechargeable lithium battery according to embodiments of the present disclosure includes: an additive including a sulfonate compound represented by a specific formula; an organic solvent; and a lithium salt. A rechargeable lithium battery including the electrolyte for a rechargeable lithium battery may have improved high-temperature characteristics and fast-charging performance.

[FIG. 1]

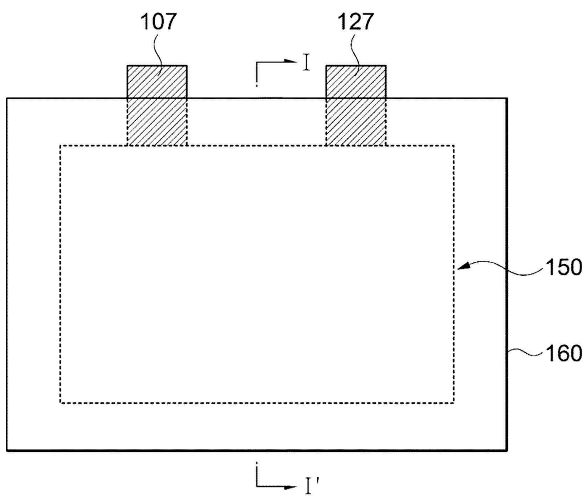


EP 4 645 503 A1

## Description

[Technical Field]

The present disclosure relates to an electrolyte for a rechargeable lithium battery and a rechargeable lithium battery including the same.

[Background Art]

Rechargeable batteries are batteries that can be repeatedly charged and discharged, and are widely used as a power source for portable electronic devices such as mobile phones and laptop PCs.

A rechargeable lithium battery has a high operating voltage and a high energy density per unit weight, making it advantageous in terms of charging speed and lightweight design. In this regard, the rechargeable lithium battery has been actively developed and applied to various industrial fields.

For example, the rechargeable lithium battery may include: an electrode assembly including a cathode, an anode and a separation membrane interposed between the cathode and the anode; and an electrolyte in which the electrode assembly is impregnated in a case.

For example, the cathode may include a lithium metal oxide capable of reversibly intercalating and deintercalating lithium ions as a cathode active material.

Meanwhile, in the rechargeable lithium battery, structural deformation of the lithium metal oxide, side reactions of the electrolyte, and the like may occur during repeated charging and discharging. In this case, the cycle life characteristics (e.g., capacity retention rate) of the rechargeable lithium battery may be reduced.

In particular, internal heat generation during repeated charging/discharging and overcharging of the rechargeable lithium battery causes a battery expansion phenomenon (an increase in the battery thickness due to gases generated inside the battery), an increase in the internal resistance of the battery, and a deterioration in the cycle life characteristics of the battery. Therefore, in order to improve high-temperature characteristics, research on adding various additives to the battery is being conducted.

[Summary of Invention]

[Problems to be Solved by Invention]

An object of the present disclosure is to provide an electrolyte for a rechargeable lithium battery having improved high-temperature stability and a rechargeable lithium battery including the electrolyte.

[Means for Solving Problems]

According to exemplary embodiments, there is provided an electrolyte for a rechargeable lithium battery including: an additive including a compound represented by Formula 1 below; an organic solvent; and a lithium salt.

[Formula 1]

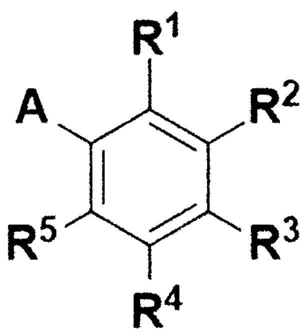

In Formula 1 above, A may be a group represented by Formula 2 below, and $R^1$ to $R^5$ may each independently be hydrogen, a C1-C5 alkyl group, a C1-C5 haloalkyl group, a C3-C12 cycloalkyl group, a C6-C12 aryl group, a C1-C5 alkoxy group, a C1-C5 alkylsulfonyl group, a halogen, a nitro group, a cyano group or an isocyanate group, or two adjacent groups among $R^1$ to $R^5$ may be bonded to each other to form a C6-C12 aromatic ring, and the remaining groups among $R^1$ to $R^5$ that do not form the aromatic ring may each independently be hydrogen, a C1-C5 alkyl group, a C1-C5 haloalkyl group, a

C3-C12 cycloalkyl group, a C6-C12 aryl group, a C1-C5 alkoxy group, a C1-C5 alkylsulfonyl group, a halogen, a nitro group, a cyano group or an isocyanate group.

[Formula 2]

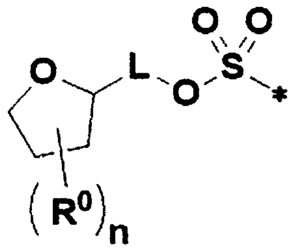

In Formula 2 above, L may be a single bond, a C1-C5 alkylene group or a C2-C5 alkenylene group, $R^0$ may be a halogen, a C1-C5 alkyl group or a C1-C5 haloalkyl group, n may be an integer from 0 to 3, and * may represent a bonding point with the benzene ring of Formula 1.

According to exemplary embodiments, the compound may be represented by Formula 1-1 below:

[Formula 1-1]

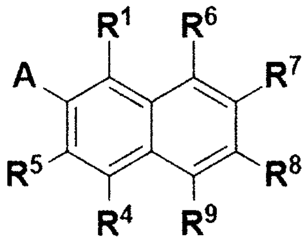

In Formula 1-1, A may be a group represented by Formula 2 below, $R^1$ and $R^4$ to $R^9$ may each independently be hydrogen, a C1-C5 alkyl group, a C1-C5 haloalkyl group, a C3-C12 cycloalkyl group, a C6-C12 aryl group, a C1-C5 alkoxy group, a C1-C5 alkylsulfonyl group, a halogen, a nitro group, a cyano group or an isocyanate group, or two adjacent groups among $R^1$ and $R^4$ to $R^9$ may be bonded to each other to form a C6-C12 aromatic ring, and the remaining groups among $R^1$ and $R^4$ to $R^9$ that do not form the aromatic ring may each independently be hydrogen, a C1-C5 alkyl group, a C1-C5 haloalkyl group, a C3-C12 cycloalkyl group, a C6-C12 aryl group, a C1-C5 alkoxy group, a C1-C5 alkylsulfonyl group, a halogen, a nitro group, a cyano group or an isocyanate group.

[Formula 2]

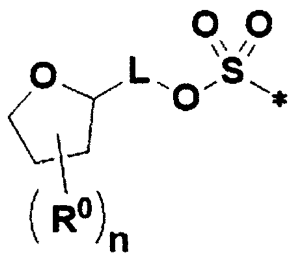

In Formula 2 above, L may be a single bond, a C1-C5 alkylene group or a C2-C5 alkenylene group, $R^0$ may be a halogen, a C1-C5 alkyl group or a C1-C5 haloalkyl group, n may be an integer from 0 to 3, and * may represent a bonding point with the benzene ring of Formula 1-1.

According to exemplary embodiments, the compound may be represented by Formula 1-2 below:

[Formula 1-2]

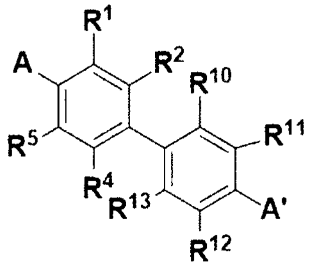

In Formula 1-2, A and A' may each independently be a group represented by Formula 2 below, $R^1$, $R^2$, $R^4$, $R^5$ and $R^{10}$ to $R^{13}$ may each independently be hydrogen, a C1-C5 alkyl group, a C1-C5 haloalkyl group, a C3-C12 cycloalkyl group, a C6-C12 aryl group, a C1-C5 alkoxy group, a C1-C5 alkylsulfonyl group, a halogen, a nitro group, a cyano group or an isocyanate group, two adjacent groups among $R^1$, $R^2$, $R^4$, $R^5$ and $R^{10}$ to $R^{13}$ may be bonded to each other to form a C6-C12 aromatic ring, and the remaining groups among $R^1$, $R^2$, $R^4$, $R^5$ and $R^{10}$ to $R^{13}$ that do not form the aromatic ring may each independently be hydrogen, a C1-C5 alkyl group, a C1-C5 haloalkyl group, a C3-C12 cycloalkyl group, a C6-C12 aryl group, a C1-C5 alkoxy group, a C1-C5 alkylsulfonyl group, a halogen, a nitro group, a cyano group or an isocyanate group.

[Formula 2]

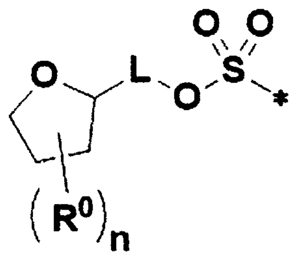

In Formula 2 above, L may be a single bond, a C1-C5 alkylene group or a C2-C5 alkenylene group, $R^0$ may be a halogen, a C1-C5 alkyl group or a C1-C5 haloalkyl group, n may be an integer from 0 to 3, and * may represent a bonding point with the benzene ring of Formula 1-2.

According to exemplary embodiments, in Formula 1 above, one of $R^1$ to $R^5$ may be hydrogen, a C1-C5 alkyl group, a C1-C5 haloalkyl group, a C3-C12 cycloalkyl group, a C6-C12 aryl group, a C1-C5 alkoxy group, a C1-C5 alkylsulfonyl group, a halogen, a nitro group, a cyano group or an isocyanate group, and the others may be hydrogen.

According to exemplary embodiments, in Formula 1 above, one of $R^1$ to $R^5$ may be hydrogen, fluorine, chlorine, bromine or iodine, and the others may be hydrogen.

According to exemplary embodiments, the content of the additive may be 0.1 to 10% by weight based on the total weight of the electrolyte.

According to exemplary embodiments, the content of the additive may be 0.2 to 2% by weight based on the total weight of the electrolyte.

According to exemplary embodiments, the organic solvent may include a linear carbonate solvent and a cyclic carbonate solvent.

According to exemplary embodiments, the cyclic carbonate solvent may include at least one selected from the group consisting of ethylene carbonate, propylene carbonate and butylene carbonate.

According to exemplary embodiments, the linear carbonate solvent may include at least one selected from the group consisting of dimethyl carbonate, ethyl methyl carbonate, diethyl carbonate, methyl propyl carbonate, ethyl propyl carbonate and dipropyl carbonate.

According to exemplary embodiments, the electrolyte may further include at least one auxiliary additive selected from the group consisting of an unsaturated cyclic carbonate compound, a fluorine-substituted carbonate compound, a sultone compound, a cyclic sulfate compound and a phosphate compound.

According to exemplary embodiments, the content of the auxiliary additive may be 0.05 to 10% by weight based on the total weight of the electrolyte.

According to exemplary embodiments, the content of the auxiliary additive may be 0.1 to 5% by weight based on the total weight of the electrolyte.

According to exemplary embodiments, the ratio of the weight of the auxiliary additive to the weight of the additive

in the electrolyte may be 0.1 to 10.

According to exemplary embodiments, there is provided a rechargeable lithium battery including: an electrode assembly in which a plurality of cathodes and a plurality of anodes are repeatedly stacked; a case configured to accommodate the electrode assembly; and the electrolyte for a rechargeable lithium battery, accommodated in the case together with the electrode assembly.

[Advantageous effects]

The electrolyte for a rechargeable lithium battery according to exemplary embodiments of the present disclosure may form a robust solid electrolyte interphase (SEI) on the electrode surface by including a sulfonyl compound containing an aryl group as an additive.

Accordingly, the capacity and resistance of the battery may be maintained even after storage at high temperatures, thereby enabling the implementation of a rechargeable lithium battery with improved high-temperature storage characteristics. The rechargeable lithium battery may also exhibit improved high-temperature cycle life characteristics by maintaining its capacity even during repeated charging and discharging at high temperatures.

In addition, the electrolyte for a rechargeable lithium battery may enable the implementation of a rechargeable lithium battery with improved fast charging characteristics by including a sulfonyl compound containing an aryl group as an additive, thereby reducing the charging time of the rechargeable lithium battery.

[Brief Description of Drawings]

FIG. 1 is a plan view schematically illustrating a rechargeable lithium battery according to exemplary embodiments.
FIG. 2 is a cross-sectional view schematically illustrating the rechargeable lithium battery according to exemplary embodiments.

[Mode for Carrying out Invention]

As used herein, the "X compound" may refer to a compound including an X unit attached to a matrix, or a derivative of the X compound.

As used herein, the "$C_a$-$C_b$" may refer to "the number of carbon (C) atoms from a to b."

The term "aryl" as used herein refers to a carbon ring aromatic group containing 5 to 10 ring atoms. Representative examples include phenyl, tolyl, xylyl, naphthyl, tetrahydronaphthyl, anthracenyl, fluorenyl, indenyl, azulenyl, and the like, but they are not limited thereto. The carbon ring aromatic group may be optionally substituted.

The term "C1-C5 alkyl" as used herein refers to an aliphatic hydrocarbon group having 1 to 5 carbon atoms. The alkyl may be a straight or branched-chain alkyl when used alone or in combination. The straight or branched-chain alkyl may specifically include methyl, ethyl, normal-propyl, isopropyl, normal-butyl, isobutyl, tert-butyl, normal pentyl, neopentyl and the like. The aliphatic hydrocarbon group may be optionally substituted.

The terms "halogen" and "halo" as used herein refer to fluorine (F), chlorine (Cl), bromine (Br), or iodine (I).

The term "haloalkyl" as used herein refers to an alkyl in which one or more hydrogen atoms are substituted with a halogen atom. For example, haloalkyl groups include $-CF_3$, $-CHF_2$, $-CH_2F$, $-CBr_3$, $-CHBr_2$, $-CH_2Br$, $-CCl_3$, $-CHCl_2$, $-CH_2Cl$, $-CI_3$, $-CHI_2$, $-CH_2I$, $-CH_2$-CF3, $-CH_2-CHF_2$, $-CH_2-CH_2F$, $-CH_2-CBr_3$, $-CH_2-CHBr_2$, $-CH_2-CH_2Br$, $-CH_2-CCl_2$, $-CH_2-CHCl_2$, $-CH_2-CH_2Cl$, $-CH_2-CI_3$, $-CH_2-CHI_2$, $-CH_2-CH_2I$ and the like. Here, alkyl and halogen are as defined above. Haloalkyl may be optionally substituted.

The term "alkoxy group" as used herein refers to an alkyl group connected to an oxygen atom. For example, the alkoxy group may include methoxy, ethoxy, propoxy, isopropoxy, butoxy, isobutoxy, tert-butoxy, pentoxy and the like. Here, alkyl is as defined above. The alkoxy group may be optionally substituted.

The term "alkylsulfonyl group" as used herein refers to a sulfonyl group ($-S(=O)_2-$) linked to an alkyl group. For example, the alkylsulfonyl group may include methylsulfonyl, ethylsulfonyl, propylsulfonyl and the like. Herein, alkyl is as defined above. The alkylsulfonyl group may be optionally substituted.

The term "cycloalkyl group" as used herein refers to a ring-shaped alicyclic hydrocarbon group. The cycloalkyl group may include, for example, cyclopropyl, cyclobutyl, cyclopentyl, cyclohexyl, cycloheptyl, cyclooctyl and the like. The alicyclic hydrocarbon group may be optionally substituted.

The term "substitution" as used herein may mean that a hydrogen atom of a hydrocarbon group is replaced with a substituent, so that the substituent is further bonded to a carbon atom of the hydrocarbon group. For example, the substituent may include at least one selected from the group consisting of a group represented by Formula 2 below, a C1-C5 alkyl group, a C1-C5 haloalkyl group, a C3-C12 cycloalkyl group, a 5-7 membered heterocycloalkyl group, a C6-C12

aryl group, a C1-C5 alkoxy group, a tetrahydrofuranylalkyl sulfonate, a halogen, a nitro group, a cyano group, and an isocyanate group.

[Formula 2]

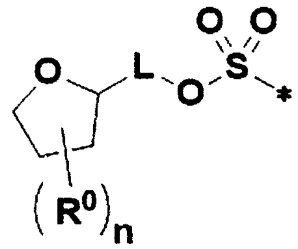

In Formula 2 above, L is a single bond, a C1-C5 alkylene or C2-C5 alkenylene group, $R^0$ is a halogen, a C1-C5 alkyl group or a C1-C5 haloalkyl group, n is an integer from 0 to 3, and * may represent a bonding point with a hydrocarbon group.

The term "heterocycloalkyl group" as used herein refers to a group in which at least one carbon in the ring of the cycloalkyl group is substituted with a heteroatom such as N, S, O or P. The hydrogen bonded to the carbon atom or heteroatom in the heterocycloalkyl group may be optionally substituted.

The term "tetrahydrofuranylalkyl sulfonate" as used herein refers to a sulfonate group connected to a tetrahydrofuranyl group and an alkylene group. The alkylene group may refer to a straight or branched-chain divalent hydrocarbon group consisting of only single bonds of carbon and hydrogen, connecting the remainder of the molecule to a radical group. For example, the tetrahydrofuranylalkyl sulfonate may include tetrahydrofuranylmethyl sulfonate, tetrahydrofuranylethyl sulfonate and the like.

The electrolyte for a rechargeable lithium battery according to exemplary embodiments may include an additive including a compound represented by Formula 1 below.

[Formula 1]

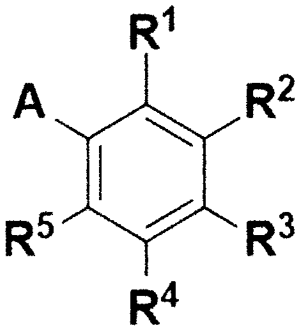

In Formula 1 above, A may be a group represented by Formula 2 below, and $R^1$ to $R^5$ may each independently be hydrogen, a C1-C5 alkyl group, a C1-C5 haloalkyl group, a C3-C12 cycloalkyl group, a C6-C12 aryl group, a C1-C5 alkoxy group, a C1-C5 alkylsulfonyl group, a halogen, a nitro group, a cyano group or an isocyanate group, or alternatively, two adjacent groups among $R^1$ to $R^5$ may be bonded to each other to form a C6-C12 aromatic ring, and the remaining groups among $R^1$ to $R^5$ that do not form the aromatic ring may each independently be hydrogen, a C1-C5 alkyl group, a C1-C5 haloalkyl group, a C3-C12 cycloalkyl group, a C6-C12 aryl group, a C1-C5 alkoxy group, a C1-C5 alkylsulfonyl group, a halogen, a nitro group, a cyano group or an isocyanate group.

[Formula 2]

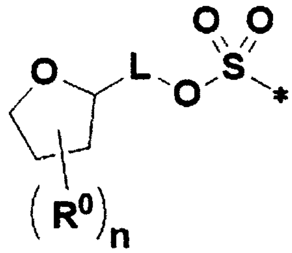

In Formula 2 above, L is a single bond, a C1-C5 alkylene group or a C2-C5 alkenylene group, $R^0$ is a halogen, a C1-C5 alkyl group or a C1-C5 haloalkyl group, n is an integer from 0 to 3, and * may represent a bonding point with the benzene ring of Formula 1.

For example, in Formula 1 above, one of $R^1$ to $R^5$ may be hydrogen, a C1-C5 alkyl group, a C1-C5 haloalkyl group, a C3-C12 cycloalkyl group, a C6-C12 aryl group, a C1-C5 alkoxy group, a C1-C5 alkylsulfonyl group, a halogen, a nitro group, a cyano group or an isocyanate group, and the others may be hydrogen. For example, $R^1$, $R^2$, $R^4$ and $R^5$ may be hydrogen, and $R^3$ may be as defined above.

For example, in Formula 1 above, one of $R^1$ to $R^5$ may be a substituted C6-C12 aryl group, and the others may be hydrogen. For example, $R^1$, $R^2$, $R^4$ and $R^5$ may be hydrogen, and $R^3$ may be a C6-C12 aryl group substituted with a tetrahydrofuranylalkyl sulfonate.

According to exemplary embodiments, in Formula 1 above, A may be a structure represented by Formula 2 above. That is, A may be a sulfonate group including a heterocyclic ring. For example, A may be a tetrahydrofuranylalkyl sulfonate. In some embodiments, A may be a tetrahydrofuranylmethyl sulfonate.

According to exemplary embodiments, in Formula 2 above, L may be a single bond, a C1-C5 alkylene group, or a C2-C5 alkenylene group. In some embodiments, L may be a C1-C3 alkylene group. For example, L may be methylene, ethylene, propylene, isopropylene, butylene, isobutylene or the like.

In exemplary embodiments, in Formula 2 above, $R^0$ may be a halogen, a C1-C5 alkyl group, or a C1-C5 haloalkyl group. In some embodiments, $R^0$ may be fluorine, a C1-C5 alkyl group, or a C1-C5 fluoroalkyl group.

In exemplary embodiments, in Formula 2 above, n may be an integer from 0 to 3. In some embodiments, n may be an integer from 0 to 1. In one embodiment, n may be 0.

In exemplary embodiments, in Formula 1 above, one of $R^1$ to $R^5$ may be hydrogen, fluorine, chlorine, bromine, or iodine, and the others may be hydrogen. For example, $R^3$ may be hydrogen, fluorine, chlorine, bromine, or iodine, and $R^1$, $R^2$, $R^4$ and $R^5$ may be hydrogen.

For example, in Formula 1 above, $R^1$ to $R^5$ may be hydrogen.

According to exemplary embodiments, two adjacent groups among $R^1$ to $R^5$ may be bonded to form a C6-C12 aromatic ring, and the remaining groups among $R^1$ to $R^5$ that do not form the aromatic ring may independently be as defined above.

For example, when $R^2$ and $R^3$ are bonded to form a ring, $R^1$, $R^4$ and $R^5$ may independently be as defined above.

According to exemplary embodiments, when two adjacent groups among $R^1$ to $R^5$ are bonded to form a C6-C12 aromatic ring, a fused ring may be formed with the benzene ring of Formula 1 to form a structure of Formula 1-1 described below.

For example, when $R^2$ and $R^3$ are bonded to form a benzene ring, a fused ring may be formed with the benzene ring of Formula 1 to form a naphthyl group structure.

The electrolyte for a rechargeable lithium battery according to exemplary embodiments may include a compound represented by Formula 1, to form a film with relatively low resistance on an electrode, for example, through a decomposition reaction of a cyclic ether group. For example, the compound may form an SEI on the surface of an anode.

Therefore, the decomposition of an organic solvent may be effectively prevented, and gas generation and an increase in battery thickness may be significantly reduced. In addition, the film with relatively low resistance may prevent an increase in initial resistance, which may significantly improve fast charging performance by increasing the mobility of lithium ions.

Accordingly, when the electrolyte for a rechargeable battery includes an additive including a compound represented by Formula 1, room-temperature characteristics and initial resistance characteristics may be improved along with high-temperature storage characteristics.

According to exemplary embodiments, the compound may be represented by Formula 1-1 below.

[Formula 1-1]

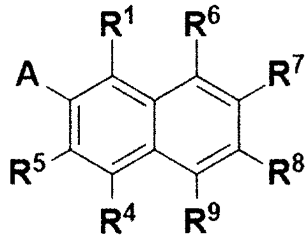

In Formula 1-1 above, A may be a group represented by Formula 2 below, and $R^1$ and $R^4$ to $R^9$ may each independently be hydrogen, a C1-C5 alkyl group, a C1-C5 haloalkyl group, a C3-C12 cycloalkyl group, a C6-C12 aryl group, a C1-C5 alkoxy group, a C1-C5 alkylsulfonyl group, a halogen, a nitro group, a cyano group or an isocyanate group, or alternatively, two adjacent groups among $R^1$ and $R^4$ to $R^9$ may be bonded to each other to form a C6-C12 aromatic ring, and the remaining groups among $R^1$ and $R^4$ to $R^9$ that do not form the aromatic ring may each independently be hydrogen, a C1-C5 alkyl group, a C1-C5 haloalkyl group, a C3-C12 cycloalkyl group, a C6-C12 aryl group, a C1-C5 alkoxy group, a C1-C5 alkylsulfonyl group, a halogen, a nitro group, a cyano group or an isocyanate group.

[Formula 2]

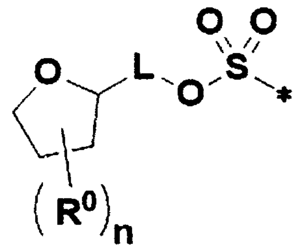

In Formula 2 above, L may be a single bond, a C1-C5 alkylene group or a C2-C5 alkenylene group, $R^0$ may be a halogen, a C1-C5 alkyl group or a C1-C5 haloalkyl group, n may be an integer from 0 to 3, and * may represent a bonding point with the benzene ring of Formula 1-1.

According to exemplary embodiments, the compound may be represented by Formula 1-2 below.

According to exemplary embodiments, the compound may be represented by Formula 1-2 below.

[Formula 1-2]

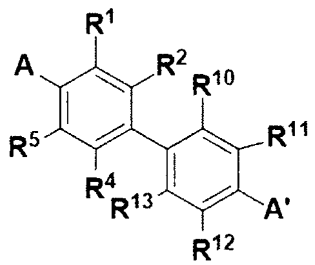

In Formula 1-2, A and A' may each independently be a group represented by Formula 2 below, and $R^1$, $R^2$, $R^4$, $R^5$ and $R^{10}$ to R13 may each independently be hydrogen, a C1-C5 alkyl group, a C1-C5 haloalkyl group, a C3-C12 cycloalkyl group, a C6-C12 aryl group, a C1-C5 alkoxy group, a C1-C5 alkylsulfonyl group, a halogen, a nitro group, a cyano group or an isocyanate group, alternatively, two adjacent groups among $R^1$, $R^2$, $R^4$, $R^5$ and $R^{10}$ to $R^{13}$ may be bonded to each other to form a C6-C12 aromatic ring, and the remaining groups among $R^1$, $R^2$, $R^4$, $R^5$ and $R^{10}$ to $R^{13}$ that do not form the aromatic ring may each independently be hydrogen, a C1-C5 alkyl group, a C1-C5 haloalkyl group, a C3-C12 cycloalkyl group, a C6-C12 aryl group, a C1-C5 alkoxy group, a C1-C5 alkylsulfonyl group, a halogen, a nitro group, a cyano group or an isocyanate group.

[Formula 2]

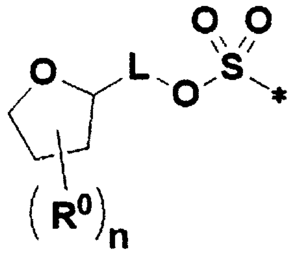

In Formula 2 above, L is a single bond, a C1-C5 alkylene group or a C2-C5 alkenylene group, $R^0$ may be a halogen, a C1-C5 alkyl group or a C1-C5 haloalkyl group, n may be an integer from 0 to 3, and * may represent a bonding point with the benzene ring of Formula 1-2.

According to exemplary embodiments, in Formula 1-2 above, A and A' may each independently be represented by Formula 2 and may be the same or different.

According to exemplary embodiments, the additive may include a compound represented by any one of Formulas 3 to 6 below.

[Formula 3]

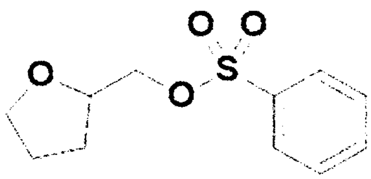

[Formula 4]

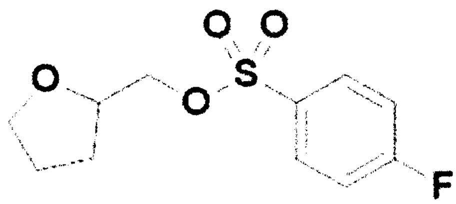

[Formula 5]

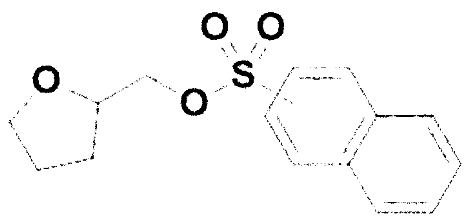

[Formula 6]

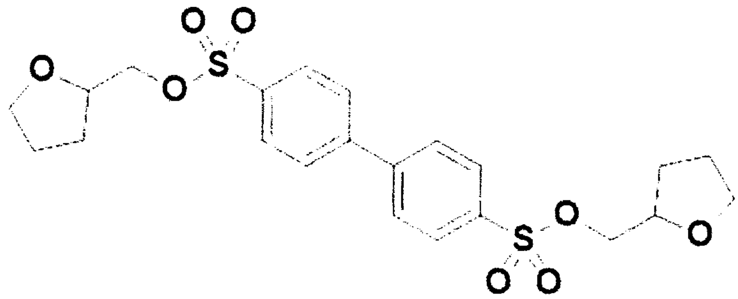

For example, when the additive includes a compound represented by Formula 5, the two sulfonate groups included in the compound may form a more stable SEI film on the anode, thereby enabling the implementation of a rechargeable lithium battery with improved high-temperature storage characteristics. In addition, the decomposition of the electrolyte due to reactions between the electrolyte and the anode may be suppressed, thereby further reducing gas generation.

In addition, the two tetrahydrofuranyl groups included in the compound may be decomposed, thereby inducing the formation of a film with relatively low resistance. Accordingly, compared to existing additives that provide high-temperature storage characteristics, other characteristics such as initial resistance value, fast charge characteristics, room-temperature cycle life, and low-temperature characteristics may also be improved.

In one embodiment, considering sufficient passivation and stable SEI film formation, the additive content may be adjusted to 0.1% by weight ("wt%") or more, 0.2 wt% or more, 0.3 wt% or more, 0.4 wt% or more, 0.5 wt% or more, or 1 wt% or more based on the total weight of the electrolyte. In addition, considering the migration of lithium ions and the activity o the active material in the electrolyte, the content of the additive may be adjusted to 10 wt% or less, 9 wt% or less, 7 wt% or less, 6 wt% or less, 5 wt% or less, 4.5 wt% or less, 4 wt% or less, 3.5 wt% or less, 3 wt% or less, or 2 wt% or less based on the total weight of the electrolyte.

In an exemplary embodiment, the content of the additive may be 0.1 to 5 wt%, and in one embodiment, may be 0.2 to 2 wt%. Within the above range, while sufficiently implementing passivation of the above-described anode, the migration of lithium ions and the activity of the cathode active material may not be excessively inhibited, and excellent capacity retention rate at high temperatures and the effect of preventing an increase in battery thickness and resistance may be improved.

The electrolyte for a rechargeable lithium battery according to the exemplary embodiments may include an organic solvent. A lithium salt, the additive, and an auxiliary additive may have sufficient solubility in the organic solvent, and the organic solvent may include an organic compound that does not react in the battery.

For example, the organic solvent may include at least one of a carbonate solvent, an ester solvent, an ether solvent, a ketone solvent, an alcohol solvent, and an aprotic solvent.

In one embodiment, the organic solvent may include a carbonate solvent.

According to exemplary embodiments, the organic solvent may include a linear carbonate solvent and a cyclic carbonate solvent.

For example, the linear carbonate solvent may include at least one of dimethyl carbonate (DMC), ethyl methyl carbonate (EMC), diethyl carbonate (DEC), methyl propyl carbonate, ethyl propyl carbonate and dipropyl carbonate.

For example, the cyclic carbonate solvent may include at least one of ethylene carbonate (EC), propylene carbonate (PC), and butylene carbonate.

In some embodiments, the organic solvent may include a larger amount of the linear carbonate solvent than the cyclic carbonate solvent, based on the volume.

For example, the mixing volume ratio of the linear carbonate solvent and the cyclic carbonate solvent may be 1:1 to 9:1, and in one embodiment, 1.5:1 to 4:1.

For example, the ester solvent may include at least one of methyl acetate (MA), ethyl acetate (EA), n-propyl acetate (n-PA), 1,1-dimethylethyl acetate (DMEA), methyl propionate (MP), and ethyl propionate (EP).

For example, the ether solvent may include at least one of dibutyl ether, tetraethylene glycol dimethyl ether (TEGDME), diethylene glycol dimethyl ether (DEGDME), dimethoxyethane, tetrahydrofuran (THF), and 2-methyltetrahydrofuran.

For example, the ketone solvent may include cyclohexanone.

For example, the alcohol solvent may include at least one of ethyl alcohol and isopropyl alcohol.

For example, the aprotic solvent may include at least one of a nitrile solvent, an amide solvent (e.g., dimethylformamide), a dioxolane solvent (e.g., 1,3-dioxolane), and a sulfolane solvent.

The electrolyte for a rechargeable lithium battery according to exemplary embodiments may include a lithium salt. The lithium salt may be expressed as Li+X-.

For example, an anion ($X^-$) of the lithium salt may be any one selected from $F^-$, $Cl^-$, $Br^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$, and $(CF_3CF_2SO_2)_2N^-$.

In some embodiments, the lithium salt may include at least one of $LiBF_4$ and $LiPF_6$.

In one embodiment, the lithium salt may be included in a concentration of 0.01 to 5 M, and in one embodiment, 0.01 to 2 M based on the organic solvent. Within the concentration range, lithium ions and/or electrons may migrate smoothly during charging and discharging of the battery.

According to exemplary embodiments, the electrolyte may further include at least one auxiliary additive selected from the group consisting of an unsaturated cyclic carbonate compound, a fluorine-substituted carbonate compound, a sultone compound, a cyclic sulfate compound and a phosphate compound.

In one embodiment, the content of the auxiliary additive may be adjusted to, for example, 10 wt% or less, 9 wt% or less, 8 wt% or less, 7 wt% or less, 6 wt% or less, 5 wt% or less, 4 wt% or less, 3 wt% or less, 2 wt% or less, or 1 wt% or less based on the total weight of the non-aqueous electrolyte, considering the interaction with the main additive including the compound represented by Formula 1. In addition, the content of the auxiliary additive may be adjusted to 0.01 wt% or more, 0.02 wt% or more, 0.03 wt% or more, 0.05 wt% or more, 0.1 wt% or more, 0.2 wt% or more, 0.3 wt% or more, 0.4 wt% or more, or 0.5 wt% or more, considering the stabilization of the SEI film.

According to exemplary embodiments, the auxiliary additive may be included in an amount of about 0.05 wt% to 10 wt% based on the total weight of the non-aqueous electrolyte. According to some embodiments, the auxiliary additive may be included in an amount of 0.1 wt% to 5 wt% based on the total weight of the non-aqueous electrolyte. Within the above range, it may be possible to enhance the durability of the electrode protective film and help improve high-temperature storage characteristics and other properties, without inhibiting the role of the main additive.

In one embodiment, the ratio of the weight of the auxiliary additive to the weight of the additive in the electrolyte may be 0.1 to 10, greater than 1 and 10 or less, or 5 to 10 or less. In this case, a rechargeable lithium battery with improved cycle characteristics along with high-temperature storage characteristics may be implemented due to the interaction between the main additive and the auxiliary additive.

The cyclic carbonate compound may include vinylene carbonate (VC), vinyl ethylene carbonate (VEC) and the like.

The fluorine-substituted cyclic carbonate compound may include fluoroethylene carbonate (FEC).

The sultone compound may include 1,3-propane sultone, 1,3-propene sultone, 1,4-butane sultone and the like.

The cyclic sulfate compound may include 1,2-ethylene sulfate, 1,2-propylene sulfate and the like.

The phosphate compound may include lithium bis(oxalato)phosphate as an oxalatophosphate compound. Alternatively, the phosphate compound may include lithium difluorophosphate ($LiPO_2F_2$).

By adding the auxiliary additive, the durability and stability of the electrode may be further improved. The auxiliary additive may be included in an appropriate amount within a range that does not hinder the movement of lithium ions in the electrolyte.

According to exemplary embodiments, the ratio of the weight of the auxiliary additive to the weight of the additive in the electrolyte may be 0.1 to 10.

According to exemplary embodiments, a rechargeable lithium battery is provided, which includes an electrode assembly in which a plurality of cathodes and a plurality of anodes are repeatedly stacked; a case that accommodate the electrode assembly; and the electrolyte for a rechargeable lithium battery accommodated together with the electrode assembly in the case.

Hereinafter, a rechargeable lithium battery according to exemplary embodiments will be described in more detail with reference to the accompanying drawings. FIGS. 1 and 2 are schematic plan and cross-sectional views, respectively, illustrating the rechargeable lithium battery according to exemplary embodiments. FIG. 2 is a cross-sectional view taken along line I-I' of FIG. 1.

Referring to FIGS. 1 and 2, the rechargeable lithium battery may include a cathode 100 and an anode 130 disposed opposite to the cathode 100.

For example, the cathode 100 may include a cathode current collector 105 and a cathode active material layer 110 on the cathode current collector 105.

For example, the cathode active material layer 110 may include a cathode active material, and if necessary, a cathode binder, and a conductive material.

For example, the cathode 100 may be prepared by mixing and stirring the cathode active material, the cathode binder, and the conductive material, etc. in a dispersion medium to prepare a cathode slurry, and then applying the cathode slurry to the cathode current collector 105, followed by drying and roll-pressing the same.

For example, the cathode current collector 105 may include stainless steel, nickel, aluminum, titanium, copper, or

an alloy thereof.

For example, the cathode active material may include lithium metal oxide particles capable of reversibly intercalating and deintercalating lithium ions.

In one embodiment, the cathode active material may include lithium metal oxide particles containing nickel.

In some embodiments, the lithium metal oxide particles may include 80 mol% or more of nickel based on the total number of moles of all elements excluding lithium and oxygen. In this case, it is possible to implement a rechargeable lithium battery having a high capacity.

In some embodiments, the lithium metal oxide particles may include 83 mol% or more, 85 mol% or more, 90 mol% or more, or 95 mol% or more of nickel based on the total number of moles of all elements excluding lithium and oxygen.

In some embodiments, the lithium metal oxide particles may further include at least one of cobalt and manganese.

In some embodiments, the lithium metal oxide particles may further include cobalt and manganese. In this case, it is possible to implement a rechargeable lithium battery having excellent output characteristics and penetration stability.

In one embodiment, the lithium metal oxide particles may be represented by Formula 7 below.

[Formula 7] $Li_xNi_{(1-a-b)}Co_aM_bO_y$

For example, in Formula 7, M may be at least one of Al, Zr, Ti, Cr, B, Mg, Mn, Ba, Si, Y, W and Sr, and x, y, a and b may satisfy $0.9 \leq x \leq 1.2$, $1.9 \leq y \leq 2.1$, $0 \leq a+b \leq 0.5$.

In some embodiments, a+b may satisfy $0<a+b \leq 0.4$, $0<a+b \leq 0.3$, $0<a+b \leq 0.2$, $0<a+b \leq 0.17$, $0<a+b \leq 0.15$, $0<a+b \leq 0.12$, $0<a+b \leq 0.1$.

In one embodiment, the lithium metal oxide particles may further include a coating element or a doping element. For example, the coating element or the doping element may include Al, Ti, Ba, Zr, Si, B, Mg, P, Sr, W, La, or an alloy thereof, or an oxide thereof. In this case, it is possible to implement a rechargeable lithium battery with more improved cycle life characteristics.

For example, the cathode binder may include an organic binder such as polyvinylidene fluoride (PVDF), vinylidene fluoride-hexafluoropropylene copolymer (PVDF-co-HFP), polyacrylonitrile, polymethyl methacrylate, etc., or an aqueous binder such as styrene-butadiene rubber (SBR). In addition, for example, the cathode binder may be used together with a thickener such as carboxymethyl cellulose (CMC).

For example, the conductive material may include carbon-based conductive materials such as graphite, carbon black, graphene, and carbon nanotubes; or metal-based conductive materials, including perovskite materials, such as tin, tin oxide, titanium oxide, $LaSrCoO_3$, and $LaSrMnO_3$.

For example, the anode 130 may include an anode current collector 125 and an anode active material layer 120 on the anode current collector 125.

For example, the anode active material layer 120 may include an anode active material, and if necessary, an anode binder and a conductive material.

For example, the anode 130 may be prepared by mixing and stirring the anode active material, the anode binder, the conductive material, etc. in a solvent to prepare an anode slurry, and then applying the anode slurry to the anode current collector 125, followed by drying and roll-pressing the same.

For example, the anode current collector 125 may include gold, stainless steel, nickel, aluminum, titanium, copper or an alloy thereof, and preferably, includes copper or a copper alloy.

For example, the anode active material may be a material capable of intercalating and deintercalating lithium ions. For example, the anode active material may include a lithium alloy, a carbon-based active material, a silicon-based active material and the like.

For example, the lithium alloy may include aluminum, zinc, bismuth, cadmium, antimony, silicon, lead, tin, gallium, indium and the like.

For example, the carbon-based active material may include crystalline carbon, amorphous carbon, carbon composite, carbon fiber and the like.

For example, the amorphous carbon may include hard carbon, cokes, mesocarbon microbead (MCMB) calcined at 1500°C or lower, mesophase pitch-based carbon fiber (MPCF) or the like. For example, the crystalline carbon may include natural graphite, graphite cokes, graphite MCMB, graphite MPCF and the like.

In one embodiment, the anode active material may include a silicon-based active material. For example, the silicon-based active material may include Si, $SiO_x$ ($0<x<2$), Si/C, SiO/C, Si-metal and the like. In this case, it is possible to implement a rechargeable lithium battery having a high capacity.

For example, when the anode active material includes the silicon-based active material, there may be a problem in that a thickness of the battery is increased during repeated charging and discharging. The rechargeable lithium battery according to exemplary embodiments may include the above-described electrolyte to relieve a thickness increase rate of the battery.

In some embodiments, the content of the silicon-based active material in the anode active material may be

included in an amount of 1 to 20 wt%, 1 to 15 wt%, or 1 to 10 wt%.

The anode binder and the conductive material may be substantially the same as or similar to the above-described cathode binder and the conductive material. For example, the anode binder may be an aqueous binder such as styrene-butadiene rubber (SBR). In addition, for example, the anode binder may be used together with a thickener such as carboxymethyl cellulose (CMC).

In one embodiment, a separation membrane 140 may be interposed between the cathode 100 and the anode 130.

In some embodiments, the anode 130 may have an area greater than that of the cathode 100. In this case, lithium ions generated from the cathode 100 may migrate smoothly to the anode 130 without precipitation during the process.

For example, the separation membrane 140 may include a porous polymer film made of a polyolefin polymer such as ethylene homopolymer, propylene homopolymer, ethylene/butene copolymer, ethylene/hexene copolymer, ethylene/methacrylate copolymer or the like. Alternatively, for example, the separation membrane 140 may include a nonwoven fabric made of glass fibers having a high melting point, polyethylene terephthalate fibers, etc.

For example, an electrode cell may be formed including the cathode 100, the anode 130 and the separation membrane 140.

For example, a plurality of electrode cells may be stacked to form an electrode assembly 150. For example, the electrode assembly 150 may be formed by winding, stacking, z-folding, etc. the separation membrane 140.

The rechargeable lithium battery according to exemplary embodiments may include: a cathode lead 107 connected to the cathode 100 and protruding to an outside of a case 160; and an anode lead 127 connected to the anode 130 and protruding to the outside of the case 160.

For example, the cathode 100 and the cathode lead 107 may be electrically connected with each other. Similarly, the anode 130 and the anode lead 127 may be electrically connected with each other.

For example, the cathode lead 107 may be electrically connected to the cathode current collector 105. In addition, the anode lead 130 may be electrically connected to the anode current collector 125.

For example, the cathode current collector 105 may include a protrusion part (cathode tab, not illustrated) on one side. The cathode active material layer 110 may not be formed on the cathode tab. The cathode tab may be formed integrally with the cathode current collector 105 or may be connected thereto by welding or the like. The cathode current collector 105 and the cathode lead 107 may be electrically connected with each other through the cathode tab.

Similarly, the anode current collector 125 may include a protrusion part (anode tab, not illustrated) on one side. The anode active material layer 120 may not be formed on the anode tab. The anode tab may be formed integrally with the anode current collector 125 or may be connected thereto by welding or the like. The anode current collector 125 and the anode lead 127 may be electrically connected with each other through the anode tab.

In one embodiment, the electrode assembly 150 may include a plurality of cathodes and a plurality of anodes. For example, the plurality of cathodes and anodes may be disposed alternately with each other, and the separation membranes may be interposed between the cathodes and the anodes. Accordingly, the rechargeable lithium battery according to an embodiment of the present invention may include a plurality of cathode tabs and a plurality of anode tabs protruding from each of the plurality of cathodes and the plurality of anodes.

In one embodiment, the cathode tabs (or, the anode tabs) may be stacked, compressed, and welded to form a cathode tab laminate (or, an anode tab laminate). The cathode tab laminate may be electrically connected to the cathode lead 107. In addition, the anode tab laminate may be electrically connected to the anode lead 127.

For example, the electrode assembly 150 may be accommodated in the case 160 together with the above-described electrolyte to form a rechargeable lithium battery.

The rechargeable lithium battery may be manufactured, for example, in a cylindrical shape, a prismatic shape, a pouch type, a coin shape or the like.

Hereinafter, embodiments of the present disclosure will be further described with reference to specific experimental examples. However, the following examples and comparative examples included in the experimental examples are only given for illustrating the present disclosure and those skilled in the art will obviously understand that various alterations and modifications are possible within the scope and spirit of the present disclosure. Such alterations and modifications are duly included in the appended claims.

Example 1

(1) Preparation of compound of Formula 3

[Formula 3]

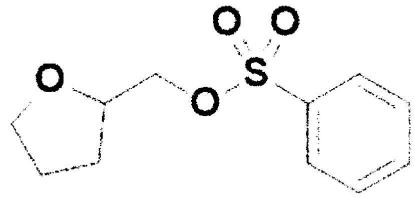

Tetrahydrofuran (250 mL), tetrahydrofurfuryl alcohol (10 g, 97.9 mmol), and triethylamine (14.9 g, 146.9 mmol) were sequentially added to a round bottom flask, and then cooled to 0°C. Benzenesulfonyl chloride (12.3 mL, 16.9 mmol) was slowly added thereto over 0.5 h. After the addition was completed, the mixture was raised to room temperature and stirred for an additional 2 h. After the reaction was completed, 150 mL of a saturated $NaHCO_3$ aqueous solution was slowly added dropwise to the reaction mixture, and the organic layer was separated and washed three times with 100 mL of distilled water. The separated organic layer was dried to remove the solvent and then purified through a silica column to obtain 15.7 g of a colorless liquid (yield 68%).
$^1$H-NMR ($CDCl_3$, 600MHz): 7.94-7.92 (d, 2H), 7.68-7.65 (t, 1H), 7.58-7.55 (t, 2H), 4.12-3.99 (m, 3H), 3.79-3.72 (m, 2H), 2.01-1.95 (m, 1H), 1.90-1.86 (m, 2H), 1.70-1.65 (m, 1H)

(2) Preparation of non-aqueous electrolyte

1 wt% of fluoroethylene carbonate (FEC), 0.5 wt% of 1,3-propane sultone (PS), 0.5 wt% of ethylene sulfate (ESA), and 0.3 wt% of lithium difluorophosphate (EnChem) were added to a mixed solvent in which ethylene carbonate (EC), ethyl methyl carbonate (EMC) and diethyl carbonate (DEC) were mixed in a volume ratio of 25:45:30. Subsequently, $LiPF_6$ was dissolved in the above mixture so as to have a concentration of 1.0 M, which was used as a base electrolyte, and then 0.3 wt% of the compound of Formula 3 above was added thereto, to prepare a non-aqueous electrolyte.

(3) Manufacture of rechargeable lithium batter

$Li[Ni_{0.88}Co_{0.06}Mn_{0.06}]O_2$ as a cathode active material, polyvinylidene fluoride (PVdF) as a binder, and carbon as a conductive material were mixed in a weight ratio of 98:1:1, and then the mixture was dispersed in N-methyl-2-pyrrolidone to prepare a cathode slurry. An aluminum foil having a thickness of 12 $\mu$m was coated with the slurry, then dried and roll-pressed to prepare a cathode.

Artificial graphite and natural graphite as anode active materials, styrene-butadiene rubber as a binder, and carboxymethyl cellulose as a thickener were mixed in a weight ratio of 96:2:2, and then the mixture was dispersed in water to prepare an anode active material slurry. A copper foil having a thickness of 8 $\mu$m was coated with the slurry, then dried and roll-pressed to prepare an anode.

A film separator made of polyethylene (PE) material with a thickness of 13 $\mu$m was stacked between the prepared electrodes, and a cell was assembled using a pouch having dimensions of 5 mm (thickness) x 50 mm (width) x 60 mm (length). Then, the non-aqueous electrolyte was injected to manufacture a 2 Ah-class rechargeable lithium battery for an electric vehicle (EV).

**Example 2**

(1) Preparation of a compound of Formula 4

[Formula 4]

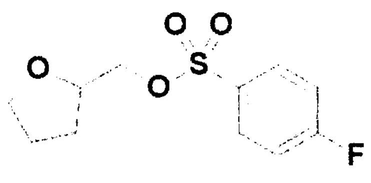

Tetrahydrofuran (120 mL), tetrahydrofurfuryl alcohol (9 g, 88.1 mmol), and triethylamine (13.4 g, 132.2 mmol)

were sequentially added to a round bottom flask, and then cooled to 0°C. Fluorobenzenesulfonyl chloride (20.6 g, 105.8 mmol), dissolved in tetrahydrofuran (100 mL), was slowly added thereto over 0.5 h. After the addition was completed, the temperature was raised to room temperature and stirred for an additional 2 h. After the reaction was completed, 150 mL of a saturated $NaHCO_3$ aqueous solution was slowly added dropwise to the reaction mixture, and the organic layer was separated and washed three times with 150 mL of distilled water. The separated organic layer was dried to remove the solvent and then purified through a silica column to obtain 17.6 g of a white solid (yield 96%).
$^1$H-NMR ($CDCl_3$, 600MHz): 7.97-7.94 (m, 2H), 7.28-7.22 (m, 2H), 4.12-4.06 (m, 2H), 4.03-4.00 (m, 1H), 3.79-3.73 (m, 2H), 2.00-1.96 (m, 1H), 1.91-1.87 (m, 2H), 1.69-1.64 (m, 1H)

(2) Manufacture of non-aqueous electrolyte and rechargeable lithium battery

A rechargeable lithium battery was manufactured in the same manner as in Example 1, except that the non-aqueous electrolyte was prepared using the compound of Formula 4 instead of the compound of Formula 3.

## Comparative Example 1

A rechargeable lithium battery was manufactured in the same manner as in Example 1, except that 1,3-propenesultone (PRS) was used instead of the compound of Formula 3 in the preparation of the non-aqueous electrolyte.

## Comparative Example 2

A rechargeable lithium battery was manufactured in the same manner as in Example 1, except that the compound of Formula 3 was not added to the non-aqueous electrolyte.

## Experimental Example 1: Evaluation of initial performance

1) Measurement of initial discharge capacity

The rechargeable lithium batteries according to the above-described examples and comparative examples were each charged (CC-CV 1.0C 4.2V 0.05C CUT-OFF) and discharged (CC 1.0C 3.0V CUT-OFF) once at -10°C, and the initial discharge capacity was then measured.

2) Measurement of initial discharge internal resistance (DCIR)

The rechargeable lithium batteries of the examples and comparative examples were subjected to 0.5C CC/CV charge (4.2V 0.05C CUT-OFF) at room temperature, at 25°C, and then 0.5C CC discharge up to a state of charge (SOC) of 60. At the SOC 60 point, the batteries were discharged and recharged for 10 seconds, respectively, while varying the C-rate to 0.2C, 0.5C, 1C, 1.5C, 2C and 2.5C, and then the DCIR was measured.

## Experimental Example 2: Evaluation of high-temperature storage characteristics

1) Measurement of capacity retention rate (Ret)

The rechargeable lithium batteries of the examples and comparative examples were subjected to 0.5C CC/CV charge (4.2V, 0.05C CUT-OFF) and 0.5C CC discharge (2.7V CUT-OFF) three times each at 25°C, and the discharge capacities C1 at the third cycle were measured. The charged rechargeable lithium batteries were stored at 60°C for 12 weeks, then additionally left at room temperature for 30 minutes, and subsequently subjected to 0.5C CC discharge (2.75V CUT-OFF), where the discharge capacities C2 were measured. The capacity retention rate was calculated according to Equation 1 below and the results thereof are shown in Table 1 below.

[Equation 1]

$$\text{Capacity retention rate (\%)} = C2/C1 \times 100\ (\%)$$

2) Measurement of internal resistance (DCIR) increase rate

The rechargeable lithium batteries of the examples and comparative examples were subjected to 0.5C CC/CV

charge (4.2V 0.05C CUT-OFF) at 25°C, and then 0.5C CC discharge up to a state of charge (SOC) of 60. At the SOC 60 point, the batteries were discharged and recharged for 10 seconds, respectively, while varying the C-rate to 0.2C, 0.5C, 1C, 1.5C, 2C and 2.5C, then DCIRs R1 were measured. The charged rechargeable lithium batteries of the examples and comparative examples were left at 60°C for 12 weeks under a condition of being exposed to the atmosphere, followed by additionally leaving at room temperature for 30 minutes, and then DCIRs R2 were measured by the same method as described above. The internal resistance increase rate was calculated by the following equation, and result values are described in Table 1 below.

[Equation 2]

$$\text{Internal resistance increase rate (\%)} = (R2-R1)/R1 \times 100(\%)$$

**Experimental Example 3: Evaluation of high-temperature cycle life characteristics**

The rechargeable lithium batteries of the examples and comparative examples were subjected to 1.0C CC/CV charge (4.2V, 0.05C CUT-OFF) and 1.0C CC discharge (2.7V CUT-OFF) for 500 cycles at 45°C. At this time, the discharge capacity at the first cycle was referred to as C, and the high-temperature cycle life capacity retention rate was determined by dividing the discharge capacity at the 500th cycle by the discharge capacity at the first cycle.

**Experimental Example 4: Evaluation of fast charge characteristics**

The rechargeable lithium batteries of the examples and comparative examples were charged at 0.33C up to a state of charge (SOC) of 8%, then charged at 2.5C-2.25C-2C-1.75C-1.5C-1.0C stage by stage in the section of SOC 8-80%, and again charged at 0.33C (4.2V, 0.05C cut-off) in the section of SOC 80-100%. The time taken for the charing process was measured, and the measured charging times are listed in Table 1 below.

[TABLE 1]

| | Initial performance | | High-temperature storage characteristics | | High-temperature cycle life characteristics | Fast charging time (min) |
|---|---|---|---|---|---|---|
| | Capacity (mAh) | DCIR (mΩ) | Capacity retention rate (%) | Resistance increase rate (%) | Capacity retention rate (%) | |
| Example 1 | 1897 | 31.8 | 85 | 104 | 78.2 | 25.0 |
| Example 2 | 1898 | 30.9 | 84 | 108 | 78.4 | 24.6 |
| Comparative Example 1 | 1895 | 33.2 | 84 | 117 | 73.1 | 26.7 |
| Comparative Example 2 | 1899 | 31.0 | 83 | 117 | 70.4 | 25.8 |

Referring to Table 1 above, in the rechargeable lithium batteries of the examples, which included the electrolyte containing a compound represented by Formula 1, the initial resistance and the resistance increase rate after high-temperature storage were reduced, and the capacity was maintained at a high rate even during repeated charging and discharging at high temperatures, and the charging time was reduced, thereby also improving the fast charging characteristics compared to the case where no additive was included.

In particular, it can be confirmed that, as compared to Comparative Example 1, where PRS was used as an additive instead of the compound represented by Formula 1, the rechargeable lithium battery of Example 1 has a charging time that is reduced by 6.4%, and the rechargeable lithium battery of Example 2 has a charging time that is reduced by 7.9%.

On the other hand, the rechargeable lithium batteries of the comparative examples, where an electrolyte not including the compound represented by Formula 1 was used, have worse high-temperature characteristics compared to the rechargeable lithium batteries of the examples.

The contents described above are merely examples of applying the principles of the present disclosure, and other configurations may be further included without departing from the scope of the present disclosure.

## Claims

1. An electrolyte for a rechargeable lithium battery comprising: an additive including a compound represented by Formula 1 below; an organic solvent; and a lithium salt:

[Formula 1]

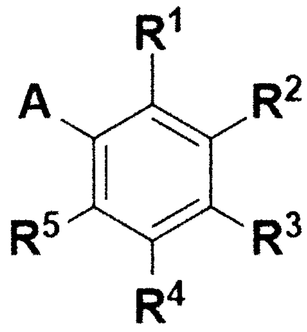

(in Formula 1 above, A is a group represented by Formula 2 below, and $R^1$ to $R^5$ are each independently hydrogen, a C1-C5 alkyl group, a C1-C5 haloalkyl group, a C3-C12 cycloalkyl group, a C6-C12 aryl group, a C1-C5 alkoxy group, a C1-C5 alkylsulfonyl group, a halogen, a nitro group, a cyano group or an isocyanate group, or alternatively, two adjacent groups among $R^1$ to $R^5$ are bonded to each other to form a C6-C12 aromatic ring, and the remaining groups among $R^1$ to $R^5$ that do not form the aromatic ring are each independently hydrogen, a C1-C5 alkyl group, a C1-C5 haloalkyl group, a C3-C12 cycloalkyl group, a C6-C12 aryl group, a C1-C5 alkoxy group, a C1-C5 alkylsulfonyl group, a halogen, a nitro group, a cyano group or an isocyanate group).

[Formula 2]

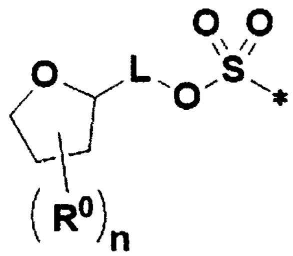

(in Formula 2 above, L is a single bond, a C1-C5 alkylene group or a C2-C5 alkenylene group, $R^0$ is a halogen, a C1-C5 alkyl group or a C1-C5 haloalkyl group, n is an integer from 0 to 3, and * represents a bonding point with the benzene ring of Formula 1).

2. The electrolyte for a rechargeable lithium battery according to claim 1, wherein the compound is represented by Formula 1-1 below:

[Formula 1-1]

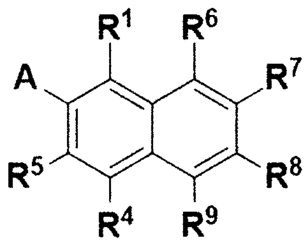

(in Formula 1-1, A is a group represented by Formula 2 below, $R^1$ and $R^4$ to $R^9$ are each independently hydrogen, a C1-C5 alkyl group, a C1-C5 haloalkyl group, a C3-C12 cycloalkyl group, a C6-C12 aryl group, a C1-C5 alkoxy

group, a C1-C5 alkylsulfonyl group, a halogen, a nitro group, a cyano group or an isocyanate group, or two adjacent groups among $R^1$ and $R^4$ to $R^9$ are bonded to each other to form a C6-C12 aromatic ring, and the remaining groups among $R^1$ and $R^4$ to $R^9$ that do not form the aromatic ring are each independently hydrogen, a C1-C5 alkyl group, a C1-C5 haloalkyl group, a C3-C12 cycloalkyl group, a C6-C12 aryl group, a C1-C5 alkoxy group, a C1-C5 alkylsulfonyl group, a halogen, a nitro group, a cyano group or an isocyanate group)

[Formula 2]

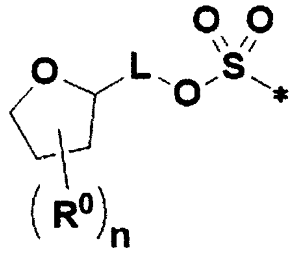

(in Formula 2 above, L is a single bond, a C1-C5 alkylene group or a C2-C5 alkenylene group, $R^0$ is a halogen, a C1-C5 alkyl group or a C1-C5 haloalkyl group, n is an integer from 0 to 3, and * represents a bonding point with the benzene ring of Formula 1-1).

3. The electrolyte for a rechargeable lithium battery according to claim 1, wherein the compound is represented by Formula 1-2 below:

[Formula 1-2]

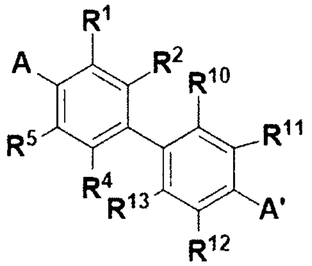

(in Formula 1-2, A and A' are each independently a group represented by Formula 2 below,
$R^1$, $R^2$, $R^4$, $R^5$ and $R^{10}$ to $R^{13}$ are each independently hydrogen, a C1-C5 alkyl group, a C1-C5 haloalkyl group, a C3-C12 cycloalkyl group, a C6-C12 aryl group, a C1-C5 alkoxy group, a C1-C5 alkylsulfonyl group, a halogen, a nitro group, a cyano group or an isocyanate group, or
two adjacent groups among $R^1$, $R^2$, $R^4$, $R^5$ and $R^{10}$ to $R^{13}$ are bonded to each other to form a C6-C12 aromatic ring, and the remaining groups among $R^1$, $R^2$, $R^4$, $R^5$ and $R^{10}$ to $R^{13}$ that do not form the aromatic ring are each independently hydrogen, a C1-C5 alkyl group, a C1-C5 haloalkyl group, a C3-C12 cycloalkyl group, a C6-C12 aryl group, a C1-C5 alkoxy group, a C1-C5 alkylsulfonyl group, a halogen, a nitro group, a cyano group or an isocyanate group)

[Formula 2]

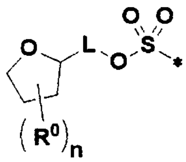

(in Formula 2 above, L is a single bond, a C1-C5 alkylene group or a C2-C5 alkenylene group, $R^0$ is a halogen, a C1-C5 alkyl group or a C1-C5 haloalkyl group, n is an integer from 0 to 3, and * represents a bonding point with the benzene ring of Formula 1-2).

4. The electrolyte for a rechargeable lithium battery according to claim 1, wherein in Formula 1 above, one of $R^1$ to $R^5$ is hydrogen, a C1-C5 alkyl group, a C1-C5 haloalkyl group, a C3-C12 cycloalkyl group, a C6-C12 aryl group, a C1-C5 alkoxy group, a C1-C5 alkylsulfonyl group, a halogen, a nitro group, a cyano group or an isocyanate group, and the others are hydrogen.

5. The electrolyte for a rechargeable lithium battery according to claim 1, wherein in Formula 1 above, one of $R^1$ to $R^5$ is hydrogen, fluorine, chlorine, bromine or iodine, and the others are hydrogen.

6. The electrolyte for a rechargeable lithium battery according to claim 1, wherein the content of the additive is 0.1 to 10% by weight based on the total weight of the electrolyte.

7. The electrolyte for a rechargeable lithium battery according to claim 1, wherein the content of the additive is 0.2 to 2% by weight based on the total weight of the electrolyte.

8. The electrolyte for a rechargeable lithium battery according to claim 1, wherein the organic solvent comprises a linear carbonate solvent and a cyclic carbonate solvent.

9. The electrolyte for a rechargeable lithium battery according to claim 8, wherein the cyclic carbonate solvent comprises at least one selected from the group consisting of ethylene carbonate, propylene carbonate and butylene carbonate.

10. The electrolyte for a rechargeable lithium battery according to claim 8, wherein the linear carbonate solvent comprises at least one selected from the group consisting of dimethyl carbonate, ethyl methyl carbonate, diethyl carbonate, methyl propyl carbonate, ethyl propyl carbonate and dipropyl carbonate.

11. The electrolyte for a rechargeable lithium battery according to claim 1, wherein the electrolyte further comprises at least one auxiliary additive selected from the group consisting of an unsaturated cyclic carbonate compound, a fluorine-substituted carbonate compound, a sultone compound, a cyclic sulfate compound and a phosphate compound.

12. The electrolyte for a rechargeable lithium battery according to claim 11, wherein the content of the auxiliary additive is 0.05 to 10% by weight based on the total weight of the electrolyte.

13. The electrolyte for a rechargeable lithium battery according to claim 11, wherein the content of the auxiliary additive is 0.1 to 5% by weight based on the total weight of the electrolyte.

14. The electrolyte for a rechargeable lithium battery according to claim 11, wherein the ratio of the weight of the auxiliary additive to the weight of the additive in the electrolyte is 0.1 to 10.

15. A rechargeable lithium battery comprising:

an electrode assembly in which a plurality of cathodes and a plurality of anodes are repeatedly stacked;
a case configured to accommodate the electrode assembly; and
the electrolyte for a rechargeable lithium battery according to claim 1, accommodated in the case together with the electrode assembly.

[FIG. 1]

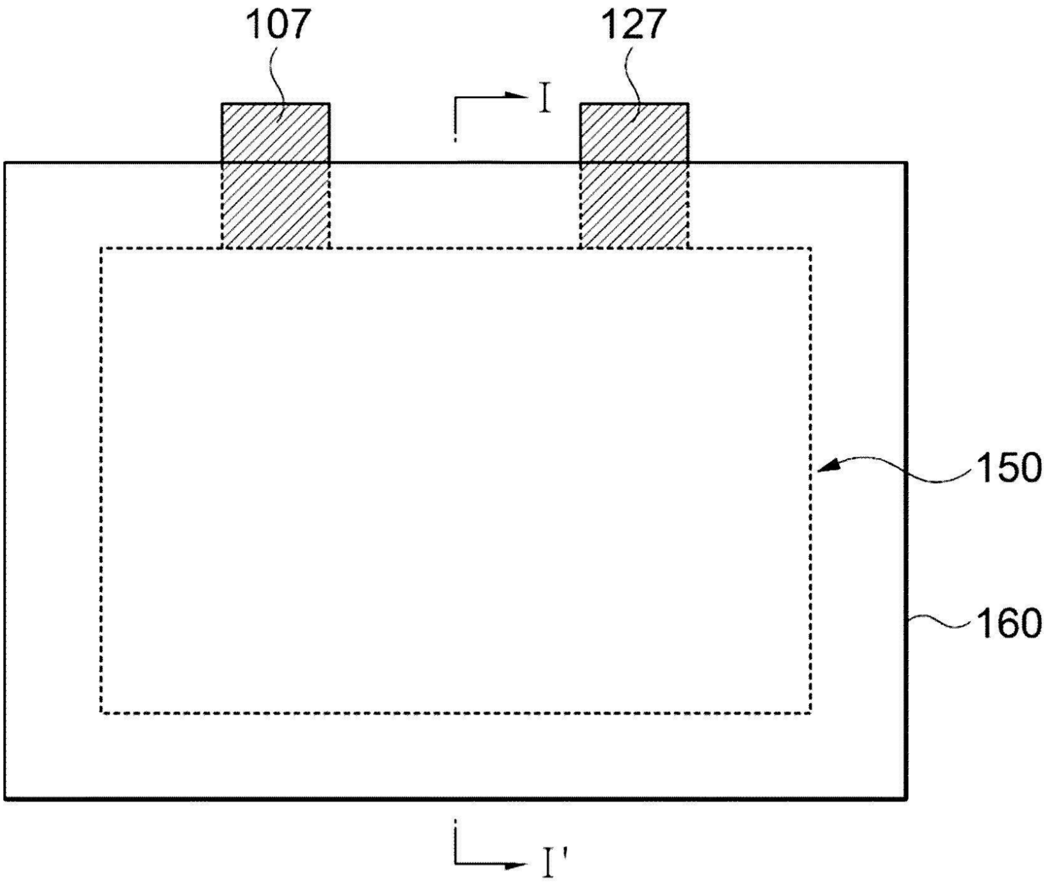


[FIG. 2]

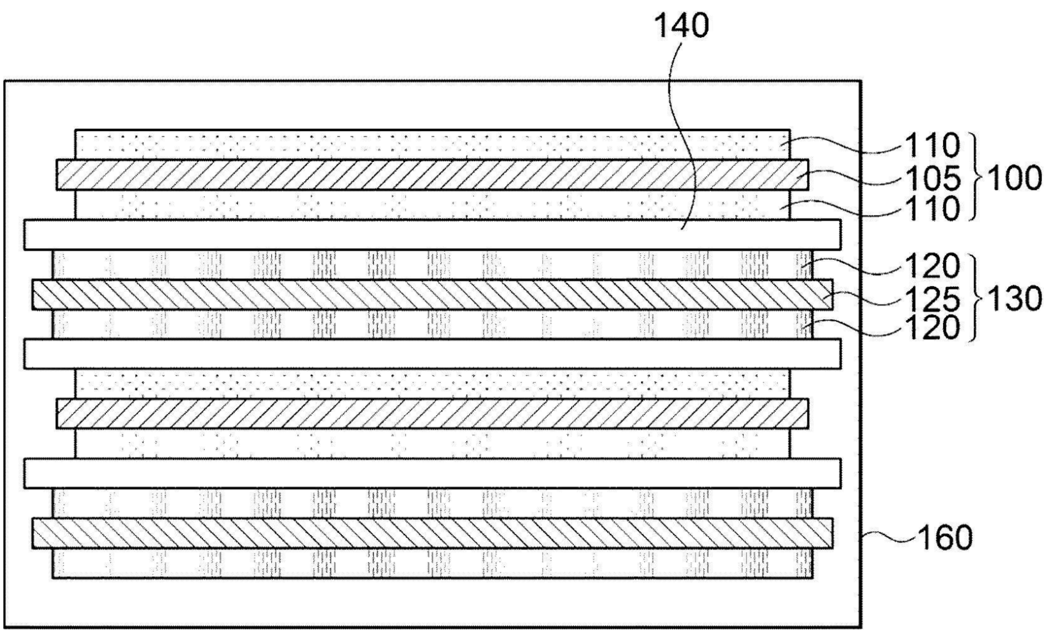

## INTERNATIONAL SEARCH REPORT

International application No. **PCT/KR2023/021218**

### A. CLASSIFICATION OF SUBJECT MATTER

**H01M 10/0567**(2010.01)i; **H01M 10/0569**(2010.01)i; **H01M 50/103**(2021.01)i

According to International Patent Classification (IPC) or to both national classification and IPC

### B. FIELDS SEARCHED

Minimum documentation searched (classification system followed by classification symbols)

H01M 10/0567(2010.01); H01M 10/052(2010.01); H01M 10/0525(2010.01); H01M 10/0568(2010.01); H01M 4/36(2006.01); H01M 4/60(2006.01); H01M 4/62(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal), STN (registry, caplus) & keywords: 리튬 이차 전지(lithium secondary battery), 전해액(electrolyte), 첨가제(additive), 테트라하이드로푸라닐알킬 설포네이트(tetrahydrofuranylalkyl sulfonate), 페닐(phenyl), 나프틸(naphthyl)

### C. DOCUMENTS CONSIDERED TO BE RELEVANT

| Category* | Citation of document, with indication, where appropriate, of the relevant passages | Relevant to claim No. |
|---|---|---|
| A | CN 112054241 A (GUANGZHOU TINCI MATERIALS TECHNOLOGY CO., LTD.) 08 December 2020 (2020-12-08)<br>See claims 1-2; and paragraphs [0009]-[0016]. | 1-15 |
| A | US 2013-0130102 A1 (SAKAMOTO, K. et al.) 23 May 2013 (2013-05-23)<br>See entire document. | 1-15 |
| A | JP 2017-183067 A (SUMITOMO SEIKA CHEM. CO., LTD.) 05 October 2017 (2017-10-05)<br>See entire document. | 1-15 |
| A | WO 2019-113518 A1 (ENEVATE CORPORATION) 13 June 2019 (2019-06-13)<br>See entire document. | 1-15 |
| A | STENGER-SMITH, J. D. et al. Synthesis and Characterization of bis(Tetrahydrofurfuryl) Ether. ChemistryOpen. 2016, vol. 5, pp. 297-300.<br>See entire document. | 1-15 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **01 April 2024** | **01 April 2024** |
| Name and mailing address of the ISA/KR<br>**Korean Intellectual Property Office**<br>**Government Complex-Daejeon Building 4, 189 Cheongsa-ro, Seo-gu, Daejeon 35208**<br>Facsimile No. **+82-42-481-8578** | Authorized officer<br><br>Telephone No. |

Form PCT/ISA/210 (second sheet) (July 2022)

**INTERNATIONAL SEARCH REPORT**

International application No.
**PCT/KR2023/021218**

**C. DOCUMENTS CONSIDERED TO BE RELEVANT**

| Category* | Citation of document, with indication, where appropriate, of the relevant passages | Relevant to claim No. |
|---|---|---|
| PX | KR 10-2023-0001819 A (SK ON CO., LTD.) 05 January 2023 (2023-01-05)<br>See claims 1-14; and paragraphs [0156]-[0157] and [0166]-[0167]. | 1-15 |

Form PCT/ISA/210 (second sheet) (July 2022)

**INTERNATIONAL SEARCH REPORT**
**Information on patent family members**

International application No.
**PCT/KR2023/021218**

| Patent document cited in search report | Publication date (day/month/year) | Patent family member(s) | Publication date (day/month/year) |
|---|---|---|---|
| CN 112054241 A | 08 December 2020 | CN 112054241 B | 21 June 2022 |
| US 2013-0130102 A1 | 23 May 2013 | CN 103038224 A | 10 April 2013 |
| | | CN 202433264 U | 12 September 2012 |
| | | JP 2013-014818 A1 | 12 September 2013 |
| | | WO 2012-014818 A1 | 02 February 2012 |
| JP 2017-183067 A | 05 October 2017 | None | |
| WO 2019-113518 A1 | 13 June 2019 | US 11411249 B2 | 09 August 2022 |
| | | US 11456484 B2 | 27 September 2022 |
| | | US 2019-0181501 A1 | 13 June 2019 |
| | | US 2019-0190069 A1 | 20 June 2019 |
| | | US 2023-0099618 A1 | 30 March 2023 |
| | | US 2023-0115890 A1 | 13 April 2023 |
| | | WO 2019-113527 A1 | 13 June 2019 |
| KR 10-2023-0001819 A | 05 January 2023 | CN 115548440 A | 30 December 2022 |
| | | EP 4113689 A1 | 04 January 2023 |
| | | US 2023-0013903 A1 | 19 January 2023 |

Form PCT/ISA/210 (patent family annex) (July 2022)